# EUROPEAN PATENT APPLICATION

(11) **EP 2 570 561 A1**
(43) Date of publication of application: **20.03.2013**
(21) Application number: 11181534.6
(22) Date of filing: 16.09.2011
(51) Int. Cl.: E04B 2/74, E06B 3/66

(54) **Interior sound dampening glass wall**

(71) Applicant: DEKO loft + vaeg P/S, 2630 Taastrup (DK)
(72) Inventor: Jahn, Finn Bremholm, 5800 Nyborg (DK)
(74) Representative: Roerboel, Leif

(57) **Abstract**

The invention pertains to a prefabricated glass wall module (4) for an interior wall (2) of a building, the module comprising: A first glass panel (22) and a second glass panel (24) spaced apart from each other by a spacer element (26) that is permanently placed between the two glass panels (22,24), along at least a part of the periphery or the edge (28) of the panels. The module furthermore comprises a sealing element (30) placed between the two glass panels (22,24) along the entire edge (28) of the panels in such a way that the two glass panels and the sealing element (30) form a closed hollow enclosure (32) between the two glass panels. The invention furthermore pertains to an interior wall (2) of a building comprising at least two glass wall modules (4) as described above, wherein the two glass wall modules are joined together along opposing edges using a filler (46) and sound insulating means (42).

## Description

### TECHNICAL FIELD

The present invention pertains to a glass wall module for an interior wall of a building, such as an office building. The invention furthermore pertains to an interior wall of a building comprising at least two such glass wall modules.

### BACKGROUND OF THE INVENTION

Glass walls, e.g. partition walls, for dividing open office areas into smaller offices or working stations have been widely used in the past. A benefit of using glass walls for dividing an open office environment into smaller offices is the immediate access to daylight in even larger office buildings and makes the people working in such office environments feel more connected to each other - even though they are separated by the glass wall(s). Among these known glass walls a large number of different glass walls have been described. Such glass walls generally comprise a glass plate that is mounted in a fixture, e.g. a U-profile, at the floor and ceiling. A problem with this kind of glass walls for offices and as partition walls is the limited noise reduction, because the single glass plate that commonly is used is not sufficient to dampen the sounds, which normally arise in an office environment, such as people talking in the phone, or with other colleagues etc. It has therefore been suggested to provide office walls comprising double glass plates, which are mounted at a distance from each other. Typically, this is done by first mounting a frame structure onto which the two glass plates are mounted from each side. These kind of double glass walls are rather laborious to mount and furthermore during construction of buildings there is also very often a lot of dust and other debris present, which may deposit on the inner side of said walls during and/or before mounting them, which again requires them to be dismounted and polished all over again.

Office glass walls, and partition walls of the above mentioned kind are for example known from the following documents, where DE 196 38 019 discloses a single panel glass wall generally known in the art. DE 10 2004 010 862 discloses a double glazing of an interior separation wall, which comprises glass panels attached to the outer surfaces of a frame by a transparent glue derived from toughened polyorganosiloxane. DE 203 02 006 discloses a single panel interior glass wall for office buildings. DE 203 06 480 discloses a double wall, wherein laminated glass is used. However, the wall is not formed by individual factory made double glass modules. EP 1 854 955 pertains to a partition wall made from glass elements. The glass elements are bonded to an outer surface of the floor construction and ceiling construction by an adhesive or a double-sided adhesive tape. US 2002/0100236 pertains to a double glass wall wherein the individual gals panels are attached to a frame from each side. The finished wall is not made up of pre-fabricated factory made modules ready to mount at the site.

### SUMMARY OF THE INVENTION

It is thus an object of the present invention to provide a glass wall module for an interior wall of a building, which is easy to mount without undue utilization of manpower and which have an increased sound dampening effect in the frequency region important for intelligibility of human speech.

According to the present invention, the above-mentioned and other objects are fulfilled by a prefabricated glass wall module for an interior wall of a building, the module comprising
- a first glass panel and a second glass panel spaced apart from each other by a spacer element that is permanently placed between the two glass panels, along at least a part of the periphery or the edge of the panels,
- a sealing element placed between the two glass panels along the entire edge of the panels in such a way that the two glass panels and sealing element forms a closed hollow enclosure between the two glass panels.

The human ear is most sensitive for sound in a certain frequency region, and it is no accident that these frequencies are the same as for human speech. Human speech can have frequencies from 200 Hz up to 5 kHz. However, it is the frequencies around 1 kHz up to around 3 kHz, which provide intelligibility of human speech. Thus it is these frequencies which must be considered when developing an office plan for a building. In an office environment numerous sources of sounds give rise to the overall background noise that is present. These sources are however predominantly human speech. Due to the fact that sound travels by three paths, i.e. direct, reflected and diffracted, the sound of the different human sound sources will mix in a complicated way thus generating a frequency dependent background office noise, which in open office environments can be very annoying and disturbing for the individual office workers thus leading to a lower performance of these workers.

By providing two glass panels placed at a distance from each other an increased sound dampening effect is achieved. Ideally, if the two glass panels were placed far from each other, then the sound dampening values of each of them could be added. However, by placing them at a distance (which distance is defined by the spacer element) an increased sound dampening effect is achieved.

Furthermore, since a sealing element is placed between the two glass panels along the entire edge of the panels in such a way that the two glass panels and sealing element forms a closed hollow enclosure between the two glass panels, a compact unit is provided, which may be mounted in one single operation. Moreover, the problems of deposits of dust and debris on the inner surfaces of the glass panels that is known from the construction of the prior art glass walls described above are avoided by assembling the modules in a clean process in a manufacturing plant. The assembly of the module is preferably full automatic, without or with very limited interventions by a human operator.

In an embodiment the first and second glass panels may be of substantially equal size and shape. Hereby is meant for example that both panels have a rectangular shape with substantially equal length and width, i.e. substantially equal size, but not necessarily the same thickness.

In a preferred embodiment neither the spacer element nor the sealing element extends beyond the edge of either one of the first or second glass panels. Hereby is achieved a module, which may be joined with other similar modules in a very inconspicuous way, where a number of modules forming an inner, e.g. office, wall of a building will have the appearance of one large glass wall rather than a segmented wall.

Preferably, the first glass panel is made from a different type of glass than the second glass panel. The two types of glass will have different critical frequencies, i.e. frequencies wherein a reduction in the sound dampening effect of the glass panel can be observed. Thus, by using two different types of glass it is achieved that the critical frequencies will not be the same and therefore and enhanced reduction in the sound dampening effect of complete module is avoided. Preferably, the two different types of glass are transparent glass.

According to a preferred embodiment, the thickness of the first glass panel is different from the thickness of the second glass panel. The above mentioned critical frequencies of the individual glass panels are also affected by the thickness of the respective panels. Thus, by using glass panels having two different thicknesses it is achieved that the critical frequencies will not be the same and therefore and enhanced reduction in the sound dampening effect of complete module is avoided.

Preferably, the difference in thickness between the two glass panels is between 10% and 40% of the thickness of the thickest of the two glass panels.

In a preferred embodiment, the first glass panel is a laminated glass panel made from at least two layers of glass, e.g. two, three or four different layers of glass, and wherein the second glass panel is a non-laminated glass plate. Laminated glass has an enhanced sound dampening effect as compared to non-laminated glass. Thus, by applying laminated glass in one of the panels an enhanced sound reduction of the complete module is achieved.

The second glass panel may be a toughened glass plate. Hereby is achieved a module, which has enhanced properties regarding personal safety. For example, if float glass is used instead of toughened glass, then a person that accidentally falls into the glass wall may cut him/her-self badly due to the breaking pattern of float glass. Contrary to this, toughened glass will have a breaking pattern that comprises a large number of smaller pieces of glass, which therefore is not as harmful to a person that accidentally falls into the glass wall with a force large enough to break it. Preferably, the first glass panel is a laminated glass panel made from at least two layers of glass, e.g. two, three or four different layers of glass, and wherein the second glass panel is a toughened glass plate.

Preferably, the distance between the two glass panels as defined by the spacer element, is larger than the thickness of the thickest of the two glass panels. The distance between the panels will affect the wavelength and thereby the frequency at which a cavity resonance will appear. This cavity resonance will negatively influence the sound damping at that particular frequency. Thus, in order to achieve as large a dampening effect, as compared to the thickness and cost price of the module, at tradeoff between the achieved damping effect and distance between the panels has to be made. Investigations performed by the applicant shows that a good tradeoff is achieved by the above mentioned configuration.

Alternatively, or in addition to this, the distance between the two glass panels as defined by the spacer element is larger than the combined thickness of the two glass panels.

In a preferred embodiment, the first glass panel has a thickness between 4 mm and 15 mm and the second glass panel has a thickness between 6 mm and 12 mm, but the thickness of the first and second glass panel should at the same time preferably be of different thickness.

According to another or the same preferred embodiment, the distance between the two glass panels as defined by the spacer element is between 8 mm and 30 mm.

Investigations performed by the applicant has shown that by the above mentioned dimensions an optimal tradeoff between the sound dampening effect of the module as compared to the thickness and cost price of it is achieved. By choosing the above mentioned dimensions the cavity resonance will have a peak around 200 Hz, or slightly higher. In all cases this cavity resonance will be below 500 - 1000 Hz, and therefore optimum dampening is achieved in the frequency region, which is important for intelligibility of human speech, which are the frequencies from around 1 kHz to around 3 kHz. Actually, the dampening effect for each individual glass panel can be added to each other for the frequencies substantially above the cavity resonance frequency. Thus, it is seen that the chosen dimensions are critical for the performance of the wall module as a sound barrier.

Preferably, the thickness of the whole module is between 20 mm and 70 mm, preferably between 20 mm and 60 mm, even more preferably between 30 mm and 50 mm.

The above mentioned investigations performed by the applicant will now be explained in more detail along with some examples of combinations of glass types and dimensions chosen for the experiment along with the result of these. The experiments were performed in accordance with the standard ISO 140-3:19995 procedure. The measured damping of the sound is expressed in decibel as a so called R_{w} value. The results of the measurements are shown below:
With a module as described above having a first panel made from toughened glass and having a thickness of 6 mm, combined with a second panel of laminated glass comprising two layers of a combined thickness of 8,8 mm, placed at a distance of 16 mm. from each other, the following values were obtained:
   Thickness of module T = 33 mm. Weight the module V = 35 kg/m². R_{w} = 41 dB.

With a module as described above having a first panel made from toughened glass and having a thickness of 10 mm, combined with a second panel of laminated glass comprising two layers of a combined thickness of 9,1 mm, placed at a distance of 16 mm. from each other, the following values were obtained:
Thickness of module T = 35 mm. Weight the module V = 45 kg/m². R_{w} = 45 dB.

With a module as described above having a first panel made from laminated glass comprising two layers having a combined thickness of 9,1 mm, combined with a second panel of laminated glass comprising two layers of a combined thickness of 13,1 mm, placed at a distance of 20 mm. from each other, the following values were obtained:
Thickness of module T = 42 mm. Weight the module V = 50 kg/m². R_{w} = 50 dB.

With a module as described above having a first panel made from laminated glass comprising two layers having a combined thickness of 8,8 mm, combined with a second panel of toughened glass having a thickness of 10 mm, placed at a distance of 24 mm. from each other, the following values were obtained:
Thickness of module T = 42 mm. Weight the module V = 45 kg/m². R_{w} = 47 dB.

With a module as described above having a first panel made from laminated glass comprising two layers having a combined thickness of 8,8 mm, combined with a second panel of toughened glass having a thickness of 8 mm, placed at a distance of 24 mm. from each other, the following values were obtained:
Thickness of module T = 40 mm. Weight the module V = 40 kg/m². R_{w} = 45 dB.

With a module as described above having a first panel made from laminated glass comprising two layers having a combined thickness of 13 mm GH moulding laminated glass, combined with a second panel of laminated glass comprising two layers of a combined thickness of 9 mm GH moulding laminated glass, placed at a distance of 24 mm. from each other, the following values were obtained:
Thickness of module T = 46 mm. Weight the module V = 50 kg/m². R_{w} = 50 dB.

With a module as described above having a first panel made from laminated glass comprising two layers having a combined thickness of 14,2 mm (8 mm + 6 mm), combined with a second panel of laminated glass comprising two layers of a combined thickness of 10,2 mm (4 mm + 6 mm), placed at a distance of 20 mm. from each other, the following values were obtained:
Thickness of module T = 49 mm. Weight the module V = 60 kg/m². R_{w} = 52 dB.

Accordingly it is seen that a sound dampening effect of between 41 dB and 52 dB can be achieved. In any given situation the achieved damping has to be optimized against the cost price of the chosen glass types, the thickness and weight of the total module.

Thus in one embodiment the thickness of the first and second glass panels as well as the distance between them in combination with the type of glass used in the panels is balanced in such a way that a noise reduction of between 40 dB and 50 dB is achieved in the frequency region that is typical for office noise.

In an embodiment of a glass wall module according to the invention, the glass module may further comprise a glass door.

In an embodiment of a glass wall module according to the invention, at least one of the glass panels is provided with a substantially opaque region. This opaque region could be placed at such a distance from two of the edges of the panel that it will make a region above 0,7 meter from the ground up to 1,5 meters from the ground would be covered by it, during use of the module as an interior wall in an office building. Such a module would be particularly suitable for a meeting room, where distraction and disturbance from other people passing by is of importance to avoid. However, in a preferred embodiment normal transparent glass of a type as mentioned above can be used and an opaque foil can be attached to the finished wall, which is made up of possible several modules. This way work pertaining to alignment of the modules is reduced.

Another aspect of the invention pertains to an interior wall of a building comprising at least two glass wall modules in accordance with any of the embodiments described above, wherein the two glass wall modules are joined together along opposing edges using a filler and sound insulating means.

In a possible embodiment, the joint between two neighboring modules are covered by a capping, which also covers at least in part the spacer elements. However, preferably the glass panels are provided with a silk print or ceramic print in the area around the joint between two neighboring modules. The silk print or ceramic print may be formed on the inner side of the panels and be nontransparent in the region wherein the spacer element is placed, and then fade away further from the edge of the panel.

### BREIF DESCRIPTION OF THE DRAWINGS

A further understanding of the nature and advantages of the present invention may be realized by reference to the remaining portions of the specification and the drawings. In the following, preferred embodiments of the invention is explained in more detail with reference to the drawings, wherein
Fig. 1 shows an embodiment of an interior wall of a building, such as an office building,
Fig. 2 shows a partial cross section of a joint between two modules,
Fig. 3 shows a partial cross section of another joint between two modules,
Fig. 4 shows an embodiment of a corner joint between two wall modules,
Fig. 5 shows a partial horizontal cross section of an embodiment of a wall starter,
Fig. 6 shows a partial horizontal cross section of another embodiment of a wall starter, and
Fig. 7 shows a partial vertical cross section of an embodiment of a wall module placed in a U-profile fixed to a floor.

### DETAILED DESCRIPTION

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure. The module 4 is attached to a wall (not shown) by a U-profile 15, and the module 10 is attached to another wall by a U-profile 17.

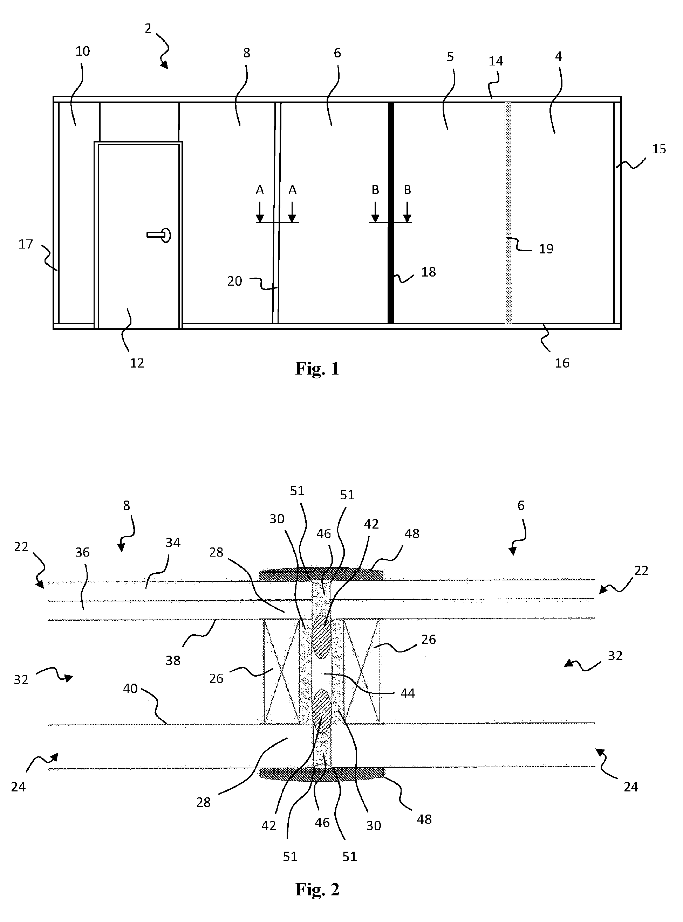

Fig. 1 shows an embodiment of an interior wall 2 of a building, such as an office building. The wall 2 comprises a number of wall modules 4, 5, 6, 8 and 10. The wall 2 also comprises a door 12. According to alternative embodiment the modules 8 and 10 could be formed as one module with a door 12. The wall modules 4, 5, 6, 8 and 10 are fixed to a U-profile 14 at the top and another U-profile 16 at the bottom. The modules 4 and 5 are joined together in the joint 19, whereas the modules 5 and 6 are jointed together in the joint 18 and the modules 6 and 8 are jointed together in the joint 20. It is a tremendous advantage that these modules 4, 6, 8 and 10 can be mounted in one operation they can be mounted in a timesaving manner.

Fig. 2 shows the partial cross section A-A of the joint 20, between the modules 6 and 8. The in part illustrated modules 6, 8 comprises a first glass panel 22 and a second glass panel 24 spaced apart from each other by a spacer element 26 that is permanently placed between the two glass panels 22 and 24, along the periphery or the edge 28 of the panels 22, 24. The illustrated panels 6, 8 also comprise a sealing element 30 placed between the two glass panels 22, 24 along the entire edge 28 of the panels 22, 24 in such a way that the two glass panels 22, 24 and sealing element 30 forms a closed hollow enclosure 32 between the two glass panels 22, 24. The sealing element 30 is preferably made from botyl, and the spacer element 26 is preferably made from aluminium, polyvinyl chloride or other suitable material. The spacer element 26 and sealing element 30 are preferably attached to the panels 22, 24 by an adhesive. This is preferably done in a controlled factory facility, so that deposits of dust and debris on the inner sides 38, 40 of the panels 22, 24 are avoided. Hereby is achieved a module 4, 6, wherein the need to polish the inner sides 38, 40 of the panels 4, 6 are avoided. The modules 4 or 6 are supplied as one single unit ready to mount. It is understood that these modules can be manufactured in a number of standard sizes, but they can also be custom made to suit the individual needs of a particular user.

In the illustrated embodiment the first glass panel 22 is a laminated glass panel 22 made from at least two layers 34, 36 of glass, and wherein the second glass panel 24 is a non-laminated glass plate.

In the illustrated embodiment the total Thickness T of the module is 42 mm, and is made from an 8,8 mm laminated first glass panel 22 and a 10 mm toughened glass panel 24. The distance between the panels 22 and 24 as defined by the spacer element 26 is in this example 24 mm.

In the joint 20 between the modules 6 and 8 there are placed two sound insulating means in the form of two sound insulating foam strips 42. In order to increase the sound dampening effect these two sound insulating foam strips 42 are placed at a distance from each other thereby creating a hollow enclosure 44. The sound insulating foam strips 42 are covered by a filler 46 that is configured for bonding to glass. The insulating foam strips 42 comprise a large number of tiny air bobbles, which increase the sound dampening effect of them.

In this embodiment the joint 20 between the two neighboring modules 6 and 8 are covered by a capping 48, which also covers the spacer elements 26. This capping 48 is preferably made from an aluminium profile, e.g. a 28 mm aluminium moulding that is attached to the two panels 6 and 8 by an adhesive.

In order to reduce internal stress in the panels 22, 24 they are provided with chamfered edges 51. In the illustrated embodiment only the outer edges are designated by the designation number 51, but it is understood that also the inner edger are chamfered, but this has been left out in order to increase the intelligibility of the figure.

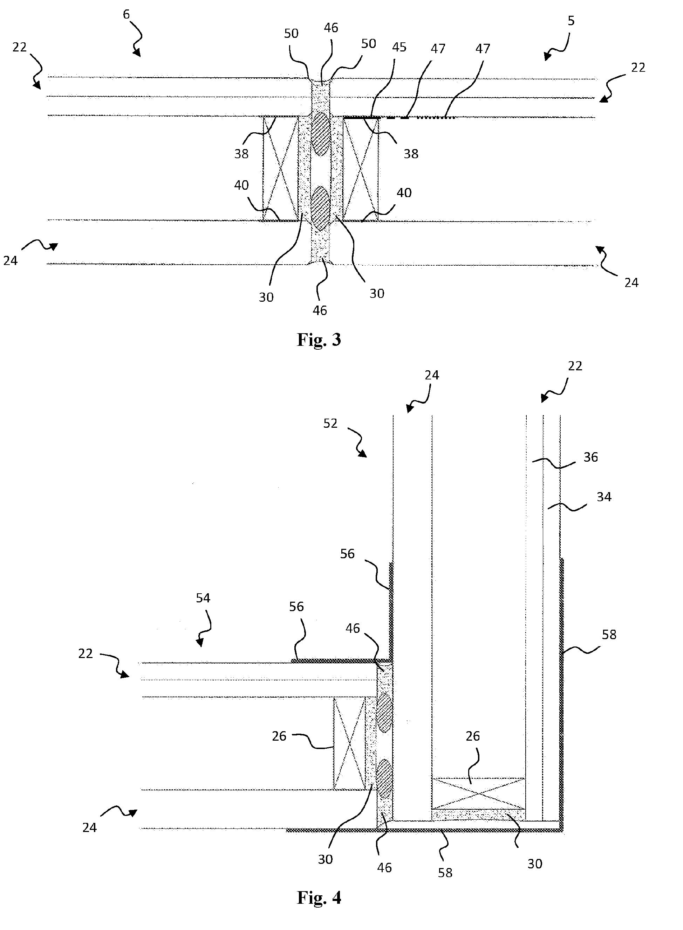

Fig. 3 shows an alternative way of configuring the joint between two modules. Fig. 3 illustrates the partial cross section B-B of the joint 18 shown in Fig. 1. In this embodiment the outer edges 50 of the first panel 22 of each of the modules 5 and 6 are polished and rounded. A black filler 46 is used in the joint 18 between the two modules 5 and 6. The inner sides 38 of the panels 22 are provided with a black strip along the edge of the panels 5 and 6. Similarly, the inner sides 40 of the panels 24 are provided with a black strip along the edge of the panels 5 and 6. These black strips cover the spacer elements 26. Hereby a distinctly marked transition between the two modules 5 and 6 is achieved. The black strip can be provided as a silk print 45 or ceramic print 45 that has a fading part 47. This silk print 45 or ceramic print 45 is only illustrated on the inner side 38 of the panel 22 of the module 5, but it is understood that such a print 45, 47 is provided on all of the inner sides of the panels 22, 24 in the vicinity of the edges thereof. The print 45 can in one embodiment be gray and have a gray fading area 47. Hereby is achieved that the joints between the modules in a finished wall would look less conspicuous, and the complete wall would therefore appear as one single glass panel. In addition to this such a wall would also be easier to clean, because no capping over the joints or other disturbing and protruding elements would be interfering with the cleaning process of the wall. Alternatively, the silk print 45 or ceramic print 45 may have a sharp edge.

Fig. 4 shows an embodiment of a corner joint between two wall modules 52 and 54. The modules 52 and 54 are joined together by the filler 46 that bonds to the glass panels 22 and 24 of module 54 and the second glass panel 24 of module 52. This corner joint is supported by an inner capping, embodied as a 1 mm aluminium moulding 56 and an outer capping, embodied as an outer 1 mm aluminium moulding 58. By the wording "1 mm aluminium moulding" is meant an aluminium plate having a thickness of 1 mm. The aluminium mouldings 56 and 58 are preferably attached to the modules 52 and 54 by an adhesive.

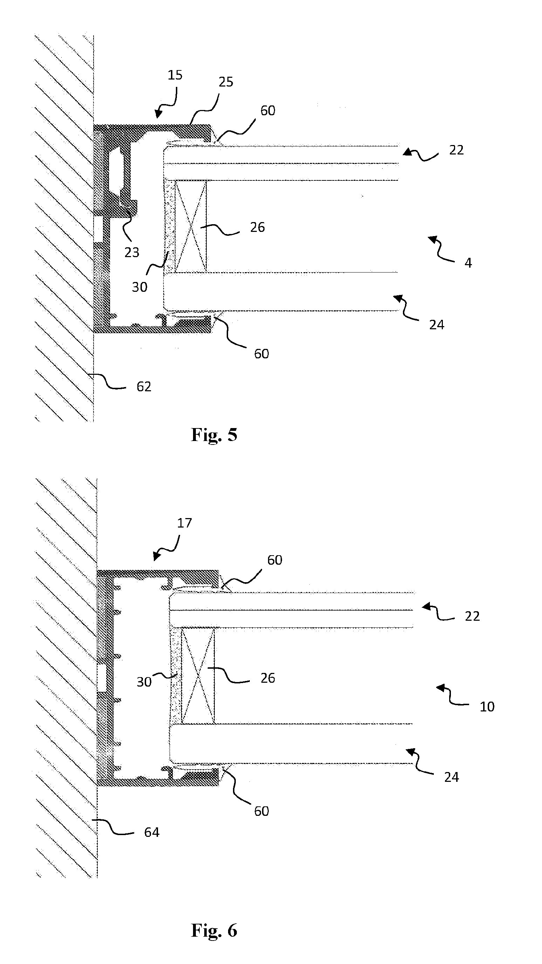

Fig. 5 and Fig. 6 show a partial horizontal cross section of two embodiments of wall starters. The module 4 is attached to a U-profile 15, and between the sides of the U-profile 15 and the outer sides of the panels 22 and 24 there is placed a packing element 60, preferably made from rubber. The U-profile 15 is attached to a wall 62 with a plurality of fasteners, preferably by screws (not shown). Similarly, the module 10 is attached to a U-profile 17, and between the sides of the U-profile 17 and the outer sides of the panels 22 and 24 there is placed a packing element 60, preferably made from rubber. The U-profile 17 is attached to a wall 64 with a plurality of fasteners, preferably by screws (not shown). The U-profiles 15 and 17 are preferably made from extruded aluminium. The U-profile 15 is a so called open profile, because it has a side 25, which may be attached to the profile 15 after insertion of the module 4, and locked by the locking arrangement 23. Hereby it is possible to account for larger variances in the production tolerances of the individual modules 4.

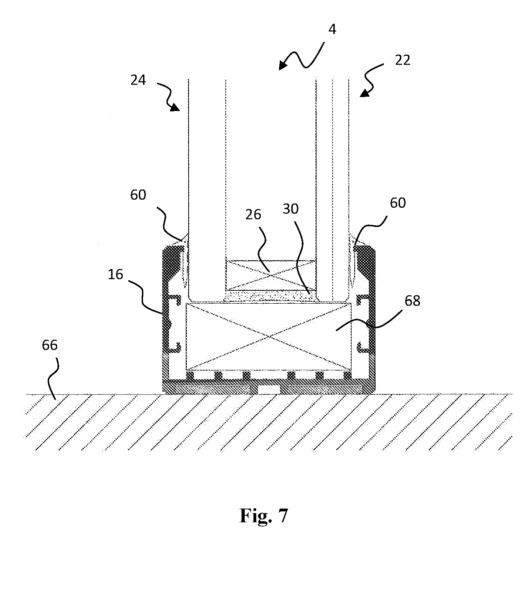

Fig. 7 shows a partial vertical cross section of an embodiment of the module 4 placed in a lower U-profile 16, which is attached to a floor 66 by fastening means (not shown), preferably a plurality of screws. Within the U-profile 16 there is placed a number (preferably two under each module 4) of spacer elements 68. The spacer elements 68 are preferably embodied as rubber chocks. The spacer elements 68 support the weight of the module 4 and enable it to be slidably moved in its intended position. Furthermore, the spacer elements can be used to align the individual modules 4 by displacing them slightly relative to the module. In addition to this a number of thin plates may be inserted between a spacer element 68 and the module 4 in order to account for differences in the level of the floor.

### LIST OF REFERENCE NUMBERS

In the following is given a list of reference numbers that are used in the detailed description of the invention.
- 2: interior wall,
- 4, 5, 6, 8, 10, 52, 54: wall modules,
- 12: door,
- 14, 15, 16, 17: U-profiles,
- 18, 19, 20: joints between modules,
- 22: first glass panel,
- 23: locking arrangement of open U-profile,
- 24: second glass panel,
- 25: open side of U-profile,
- 26: spacer element,
- 28: edge of the panels,
- 30: sealing element,
- 32: closed hollow enclosure,
- 34, 36: layers of laminated glass panel
- 38, 40: inner sides of the panels,
- 42: insulating foam strip,
- 44: hollow enclosure between two modules,
- 45: silk print or ceramic print,
- 46: filler,
- 47: fading part of silk print or ceramic print,
- 48: capping,
- 50: polished edges of a glass panel,
- 51: chamfered edges,
- 56: inner capping,
- 58: outer capping,
- 60: packing element,
- 62, 64: solid walls of a building,
- 66: floor, and
- 68: rubber chokes.

## Claims

1. A pre-fabricated glass wall module (4, 5, 6, 8, 10, 52, 54) for an interior wall (2) of a building, the module (4, 5, 6, 8, 10, 52, 54) comprising
- a first glass panel (22) and a second glass panel (24) spaced apart from each other by a spacer element (26) that is permanently placed between the two glass panels (22, 24), along at least a part of the periphery or the edge (28) of the panels (22, 24),
- a sealing element (30) placed between the two glass panels (22, 24) along the entire edge (28) of the panels (22, 24) in such a way that the two glass panels (22, 24) and sealing element (30) form a closed hollow enclosure (32) between the two glass panels (22, 24).

2. A glass wall module (4, 5, 6, 8, 10, 52, 54) according to claim 1, wherein the first glass panel (22) is made from a different type of glass than the second glass panel (24).

3. A glass wall module (4, 5, 6, 8, 10, 52, 54) according claim 1 or 2, wherein the thickness of the first glass panel (22) is different from the thickness of the second glass panel (24).

4. A glass wall module (4, 5, 6, 8, 10, 52, 54) according to claim 3, wherein the difference in thickness between the two glass panels (22, 24) is between 10% and 40% of the thickness of the thickest of the two glass panels (22, 24).

5. A glass wall module (4, 5, 6, 8, 10, 52, 54) according to any of the preceding claims, wherein the first glass panel (22) is a laminated glass panel made from at least two layers (34, 36) of glass, and wherein the second glass panel (24) is a toughened glass plate.

6. A glass wall module (4, 5, 6, 8, 10, 52, 54) according to any of the claims 3 - 5, wherein the distance between the two glass panels (22, 24) as defined by the spacer element (26) is larger than the thickness of the thickest of the two glass panels (22, 24) or larger than the combined thickness of the two glass panels (22, 24).

7. A glass wall module (4, 5, 6, 8, 10, 52, 54) according to any of the preceding claims, wherein the first glass panel (22) has a thickness between 4 mm and 15 mm and the second glass panel (24) has a thickness between 6 mm and 12 mm.

8. A glass wall module (4, 5, 6, 8, 10, 52, 54) according to any of the preceding claims, wherein the distance between the two glass panels (22, 24) as defined by the spacer element (26) is between 10 mm and 30 mm.

9. A glass wall module (4, 5, 6, 8, 10, 52, 54) according to any of the preceding claims, wherein the thickness of the whole module (4, 5, 6, 8, 10, 52, 54) is between 20 mm and 70 mm, preferably between 20 mm and 60 mm, even more preferably between 30 mm and 50 mm.

10. A glass wall module (4, 5, 6, 8, 10, 52, 54) according to any of the preceding claims, wherein the thickness of the first and second glass panels (22, 24) as well as the distance between them, in combination with the type of glass used in the panels (22, 24), are balanced in such a way that a noise reduction of between 40 dB and 50 dB is achieved in the frequency region that is typical for office noise.

11. A glass wall module (4, 5, 6, 8, 10, 52, 54) according to any of the preceding claims, wherein the glass module (4, 5, 6, 8, 10, 52, 54) further comprises a glass door (12).

12. A glass module (4, 5, 6, 8, 10, 52, 54) according to any of the preceding claims, wherein at least one of the glass panels (22, 24) is provided with a substantially opaque region.

13. An interior wall (2) of a building comprising at least two glass wall modules (4, 5, 6, 8, 10, 52, 54) in accordance with any of the preceding claims, wherein the two glass wall modules (4, 5, 6, 8, 10, 52, 54) are joined together along opposing edges (28) using a filler (46) and sound insulating means (42).

14. An interior wall (2) of a building according to claim 13, wherein the joint between two neighboring modules (4, 5, 6, 8, 10, 52, 54) are covered by a capping (48) or a silk print (45) or a ceramic print (45), which also covers at least in part the spacer elements (26).
